# EUROPEAN PATENT SPECIFICATION

(11) **EP 0 979 766 B1**
(45) Date of publication and mention of the grant of the patent: **13.10.2004**
(21) Application number: 99202358.0
(22) Date of filing: 19.07.1999
(51) Int. Cl.: B62B 9/12

(54) **Baby buggies**
Kinderwagen
Poussette d'enfants

(30) Priority: 12.08.1998 GB 9817448
(43) Date of publication of application: 16.02.2000
(73) Proprietor: Armon Limited, 1211 Geneva 3 (CH)
(72) Inventor: Riddiford, Martin Philip, London SE24 9NN (GB)
(74) Representative: Harman, Michael Godfrey

(56) References cited:
- GB-A- 2 152 447
- US-A- 3 784 252
- US-A- 5 738 410

## Description

The present invention relates to push chairs for children, and particularly to the type known as baby buggies.

Traditionally, push chairs for children have been of a perambulator ("pram") type, consisting of a boat-like gondola supported via a coach-type mounting by two pairs of relatively large wheels. In recent decades, however, a different type of child's push chair, commonly known as a baby buggy, has become popular.

The conventional construction of a baby buggy consists of two A frames linked by cross struts and having a seat located between them. Each of the two feet of each A frame has a wheel attached; one of the sloping sides of each A frame is extended at its upper end to form handle means by which the buggy can be pushed; and one of the three sides of the A frame (usually the side which extends to the handle) is hinged so that the buggy can be folded up eg for storage. In some designs of buggy, the two A frames can also be collapsed together - this is commonly termed an umbrella fold.

The seat of a buggy can vary widely. In its simplest form, the seat may be little more than a strip of material (of the type used eg for deck-chairs) held by top and bottom cross-bars; with a suitable amount of slack, this sags to form a simple but adequate seat. More elaborate seats are however common, having relatively rigid back and base parts. Side parts of more or less rigidity may also be provided. Foot-rests may also be provided.

One technique for providing seat adjustment is to provide some sort of rack and pinion arrangement. A rack is fixed to say the buggy frame, and a pinion mounted on the seat back can be put into engagement with any desired tooth in the rack. A slight variant of this principle is shown in GB 2 152 447 A, Raffaele Giordani, which uses a plate with a slot in it in place of a rack. In place of a pinion, there is a screwed knob passing through the slot which can be tightened at any desired position along the slot.

Providing adjustability of the seat should of course still permit the buggy to be folded up. For a buggy to be foldable, there are fairly severe geometrical constraints on it, and to satisfy these, the fully folded configuration has to be unique. As a result, the setting of the seat position is generally lost when the buggy is folded.

US 5 738 410, Stroud and Wagner/Lisco, shows a different technique for adjusting the position of the seat back. The seat back is restrained in its backward movement by a strap passing horizontally behind it, and the length of the strap can be adjusted by a pair of buckles, one on each side of the buggy, through which the strap passes, though the seat back remains free to move forward from its set position. This arrangement has the drawback that it is not easy to adjust the seat position to a desired setting, since the seat back has to be pushed and held forwards to allow the strap to become slack so that its buckles can be adjusted. Further, adjusting the position of a strap in a buckle is notoriously awkward, involving slackening a part of the strap in the buckle, pulling the strap through various portions of the buckle, and tightening the strap again without changing the setting of the strap in the buckle.

The general object of the present invention is to provide a novel way of setting the position of a seat in a buggy which retains the setting on folding the buggy.

According to the invention, therefore, there is provided a foldable baby buggy with an adjustable seat, including seat position setting means settable to store the chosen seat position and to thereafter return the seat to that position when the buggy is unfolded, *characterized in that* the seat position setting means is mounted between first and second X-linked bars, the first bar being coupled to the seat back and the second bar being coupled to the frame of the buggy, and comprises a disc mounted for independent rotation on a hinge between the two bars with means for locking the position of the disc relative to one bar and means for limiting the rotation of the other bar relative to the disc.

The invention thus provides a mechanical arrangement which operates automatically and is relatively easily settable and adjustable by the user.

The preferred form of the seat position setting means comprises a disc mounted for independent rotation on a hinge between two bars, with means for locking the position of the disc relative to one bar and means for limiting the rotation of the other bar relative to the disc.

According to a further feature, the invention provides a buggy wherein the seat comprises a seat back settable to a range of positions between relatively upright and fully reclined and hinged to a seat base arranged to slide forward substantially horizontally as the seat back moves to the reclined position.

Preferably a first point on the seat back and partway thereup is coupled to the frame of the buggy by coupling means so as to move vertically, a second point on the seat back partway between the first point and the bottom edge thereof is coupled to the frame by a hinged bar so as to move diagonally forward and downward, and the seat base is slidably mounted on the frame to move horizontally.

Preferably a first point on the seat back and partway thereup is coupled to the frame of the buggy by coupling means so as to move vertically, a second point on the seat back partway between the first point and the bottom edge thereof is coupled to the frame by a hinged bar so as to move diagonally forward and downward, and the seat base is slidably mounted on the frame to move horizontally.

Preferably the hinged bar extends upward beyond the seat back to fonn an X linkage therewith, an upper horizontal bar is hinged to the top end of that bar, and a vertical link bar is hinged between the forward ends of the tipper horizontal bar and the seat base.

Preferably also the coupling means comprises a bar extending rearward from the seat back and a further horizontal bar is provided, hinged at one end to the forward end of the upper horizontal bar and sliding at its back end on the further horizontal bar.

It will of course be realized that the terms horizontal and vertical are used only to indicate rough directions.

A baby buggy embodying the invention will now be described, by way of example, with reference to the drawings, in which:
Fig. 1 is a diagrammatic side view of the main structural components of a buggy;
Fig. 2 is a diagrammatic side view of the bar assembly for supporting the seat;
Fig. 3 is a diagrammatic side view of the locking mechanism;
Fig. 4 is a partial diagrammatic top view of the locking mechanism;
Fig. 5 is a partial diagrammatic top view of a modification of the locking mechanism;
Fig. 6 is a partial diagrammatic top view of a modified locking mechanism;
Fig. 7 is a perspective view of the complete buggy in the cot position, and;
Fig. 8 is a perspective view of the complete buggy in the unreclined seating position.

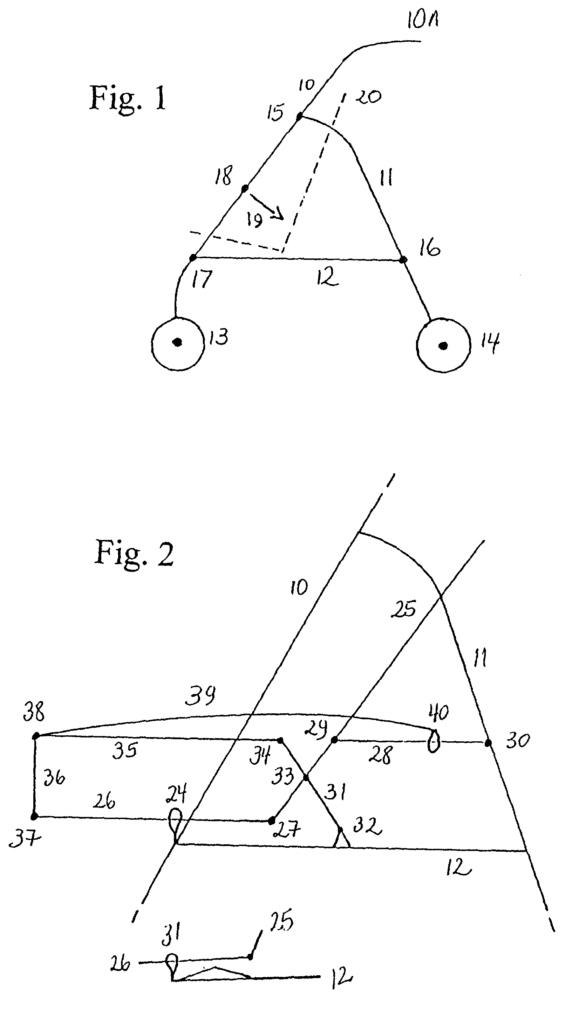

Fig. 1 is a simplified side view of a basic buggy, showing the A frame. This frame consists of a front sloping bar 10, a rear sloping bar 11, and a bottom horizontal bar 12. The front and rear bars 10 and 1 have wheels 13 and 14 attached to their lower ends, as shown. The front bar 10 is also extended and curved at its upper end to provide a handle 10A, which may consist of a suitable termination of the bar or of a cross-bar between the two A frames, which is able to collapse together as the buggy is folded. As shown, the front sloping bar 10 is also curved at its lower end to bring the wheel 13 backward somewhat, and the rear sloping bar 11 is curved at its upper end to bring its junction with the front sloping bar 10 downward somewhat.

The bars 10-12 are attached to each other by hinged pivots 15-17 as shown. In addition, the front bar 10 has a lockable hinge 18 located roughly midway between the pivots 15 and 17. This hinge 18 can be locked in the position shown, ie with the bar 10 straight, holding the A frame rigidly in the configuration shown. It can also be released, allowing the front bar 10 to fold inward as indicated by arrow 19, to collapse the frame and allow the buggy to be folded into a compact form for storage. In addition, the cross-bars and other elements may be lockably hinged so that the buggy can be folded by having its two A frames pushed together as well as by the folding of the individual A frames.

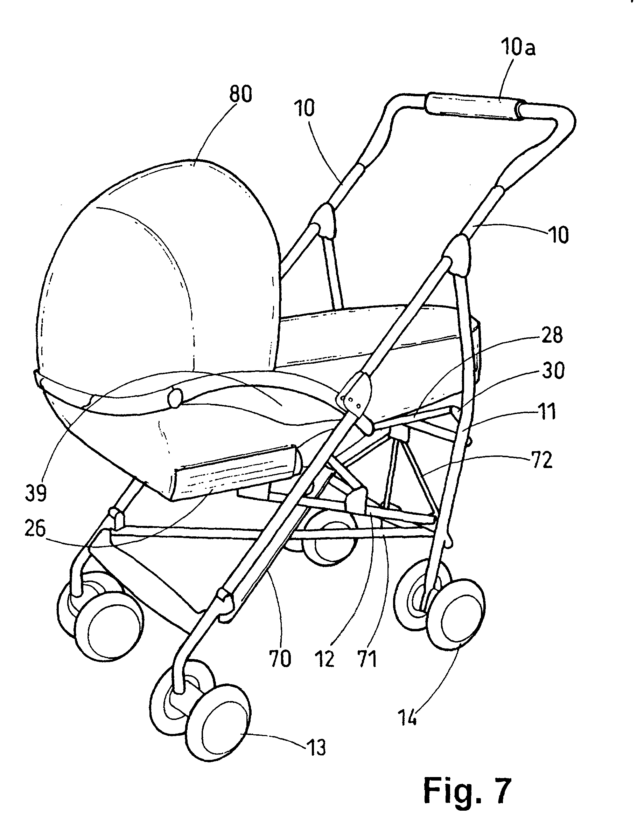

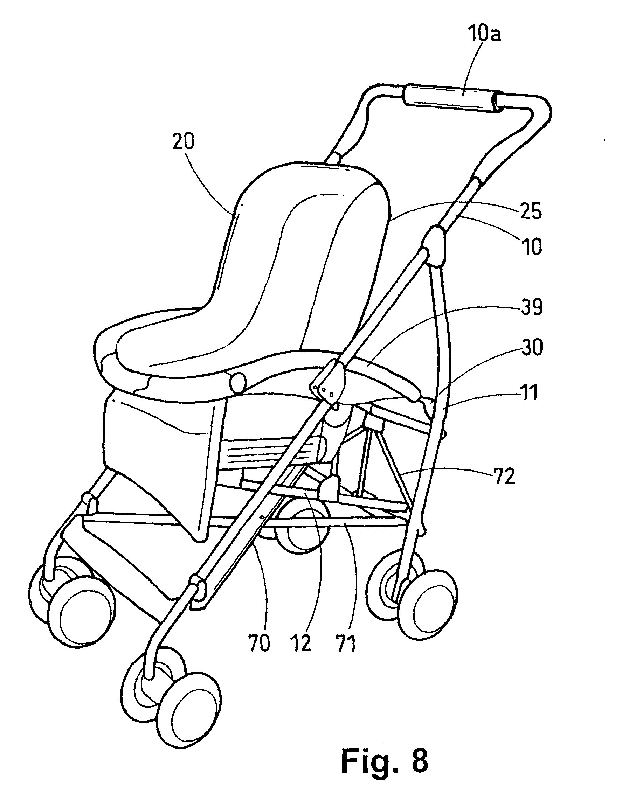

The buggy comprises two A frames, one for each side, which are kept apart by cross struts 70, 71 which is locked out and released to unfold and fold the buggy respectively by means of a standard "music stand" arrangement 72, as shown in Figs. 7 and 8. In addition, a seat 20 is mounted between the two A frames, being suitably attached to the frames and/or cross struts. The simplest form of seat consists of little more than a strip of flexible cloth, but many more elaborate versions are possible. A padded and shaped seat supported by rigid members around its upper edges may be used, and may contain rigid flat elements to give it greater strength and to maintain its shape, or a substantially rigid plastics moulding may be used, somewhat like a child's car seat. Also, if the seat contains reasonably rigid members, it will usually be formed as two portions which are relatively rigid or maintain their shape reasonably well but are hinged together or otherwise flexibly coupled together so that the seal folds with the folding of the A frames.

Fig. 2 is a simplified diagram of the seat structure of the present buggy. The seat structure consists of two matching bar assemblies, each attached to a respective one of the two A frames; extending between these two bar assemblies there are seating members on which a child actually rests. The drawing shows one of the two bar assemblies.

The bar assembly comprises two main members, a back bar 25 and a base bar 26, which are hinged together by a hinge 27. A back seating member extends between the back bars of the two bar assemblies, and a base seating member extends between the base bars of the two bar assemblies.

The back bar 25 is coupled to the rear sloping bar I 1 of the A frame by a bar 28, which is hinged to the back bar 25 by a hinge 29 and to the A frame bar 11 by a hinge 30 as shown. The base bar 26 is coupled to the A frame by a slide 24 which allows the bar 26 to slide. The slide 24 is mounted on the A frame in the region of the hinge 17, and can conveniently be mounted on the bar 12. Further, there is a bar 31, hinged at 32 on the A frame bar 12, and hinged near its midpoint by a hinge 33 to a point on the back bar 25 roughly midway between hinges 27 and 29. Hinge 33 is in fact mounted on the bar 12 but located slightly above the bar, as shown.

The bar 28 is roughly horizontal, so its pivoting about the hinge 30 results in the hinge 29 at its other end moving roughly vertically. Hinge 29 is roughly vertically above hinge 32. The bar 31 and the section of the bar 25 between hinges 27 and 29 therefore form an X linkage. As hinge 29 moves downward, closer to hinge 32, so hinge 27 moves horizontally forward. The forward horizontal movement of hinge 27 slides the base bar 26 forward through the slide 24. Since hinge 27 moves roughly horizontally, the base bar 26 remains roughly horizontal.

The bar assembly as described so far can thus be operated to rotate the back bar 25 from the near-upright position to the near-horizontal, with the base bar 26 remaining roughly horizontal but sliding forward at the same time. The seat held between the two bar assemblies is thus movable between the upright and roughly flat positions.

Returning to the bar 31, the other end of this bar is hinged by a hinge 34 to a bar 35 which extends forward roughly horizontally, and is coupled to the end of the base bar 26 by a bar 36 hinged to the bars 26 and 35 by hinges 37 and 38. Bars 26 and 35 are roughly the same length. As the seat is moved toward the reclining or flat position, the X linkage of bars 25 and 31 causes hinge 34 to move forward, so that it remains roughly above hinge 27. The bar 36 linking the ends of bars 26 and 35 ensures that bar 35 remains roughly horizontal and moves roughly parallel with bar 26. (As the seat is moved toward the reclined position, hinge 34 will move downward as well as moving forward with hinge 27, so the rearward end of bar 35 will in fact tilt slightly downward at the same time as the bar moves bodily forward.)

A final bar 39 is hinged to bars 35 and 36 at hinge 38, and extends backward to end in a slider 40 which slides on the bar 28. This bar may be slightly curved, as shown, to keep it clear of the bars 28 and 35, and may carry a dependent shield (not shown) located between the A frame and the bar assembly, to protect and conceal the bar assembly mechanism (or parts of it).

When the seat is in the fully upright position, the two bars 25 and 31 of the X frame are not far from coincident, with hinges 29 and 34 being close to each other and hinges 27 and 32 being close to each other. The A frame and the bar assembly together form, roughly, two similar parallelograms, one formed by hinges 16, 30, 29, and 32 and the other formed by hinges 27, 34, 38, and 37. If the A frame is folded up with the seat in this upright position, these two parallelograms collapse together, with the bars 28, 35, and 39 moving roughly as a unit forward and downward to lie against bars 12 and 26.

If the bar 26 is allowed to move freely, ie unconstrained by the rest of the bar assembly, and is rotated clockwise in the slider 24, the hinge 27 at its rear end will bear against the A frame bar 12 is the bar 26 and limit its rotation. When the A frame is fully open, the hinge 27 will in fact be in contact with the bar 12 only if the seat is in the fully upright position. From this position, the folding of the bar assembly is as described above. If the seat is not in the fully upright position, however, the hinge 27 will be somewhat above the bar 12. The folding of the bar assembly will then occur in two stages.

In the first stage, the parallelogram formed by hinges 16, 30, 29, and 32 will gradually collapse; the two bars 25 and 31 of the X frame will remain at the same angle to each other, with the X frame (ie these two bars 25 and 31) rotating bodily anticlockwise. This movement will move the hinge 27 at the bottom front corner of the X frame downward. Eventually, this hinge will contact the bar 12. The second stage of the folding then starts. Since hinge 27 cannot move further downward, it moves backward, sliding along the bar 12. This causes the bar 25 to rotate faster than the bar 31, so bringing these two bars toward alignment.

The first stage of folding is thus different for each different setting of the seat position, but the second stage is common to all settings. The different settings cause the assembly to initially follow a set of distinct but parallel first trajectories, so to speak, with each of these trajectories ending at a different point on the common second trajectory.

Unfolding is of course the reverse of folding. More specifically, the bar assembly will unfold along the common second trajectory, to the fully upright position; the seat can then be manually adjusted to a desired partially or wholly reclining position.

The bar assembly must also, of course, include some means for locking it into a desired position. As discussed below, a convenient place for this mechanism is at the hinge 33. The locking mechanism may be designed to lock the bars 25 and 31 rigidly together, in which case it will normally of course have to be released to fold the mechanism. However, in normal circumstances the seat will always tend to move toward the reclining position. The locking mechanism may therefore alternatively be a ratchet type mechanism which is settable to prevent the seat from moving further toward the fully reclined position but allows it to move the other way to the upright position. This allows the seat to be folded without the locking mechanism having to be released.

It will of course be realized that the details of the structure can be varied slightly from those described above. For example, the bar 25 may be slightly curved between the hinges 27 and 29, with hinge 33 lying slightly rearward of the straight line between hinges 27 and 29, and hinge 33 may not lie exactly at the midpoint of either or both the arms of the X frame. Also, the operation has been described above in simplified and slightly idealized terms.

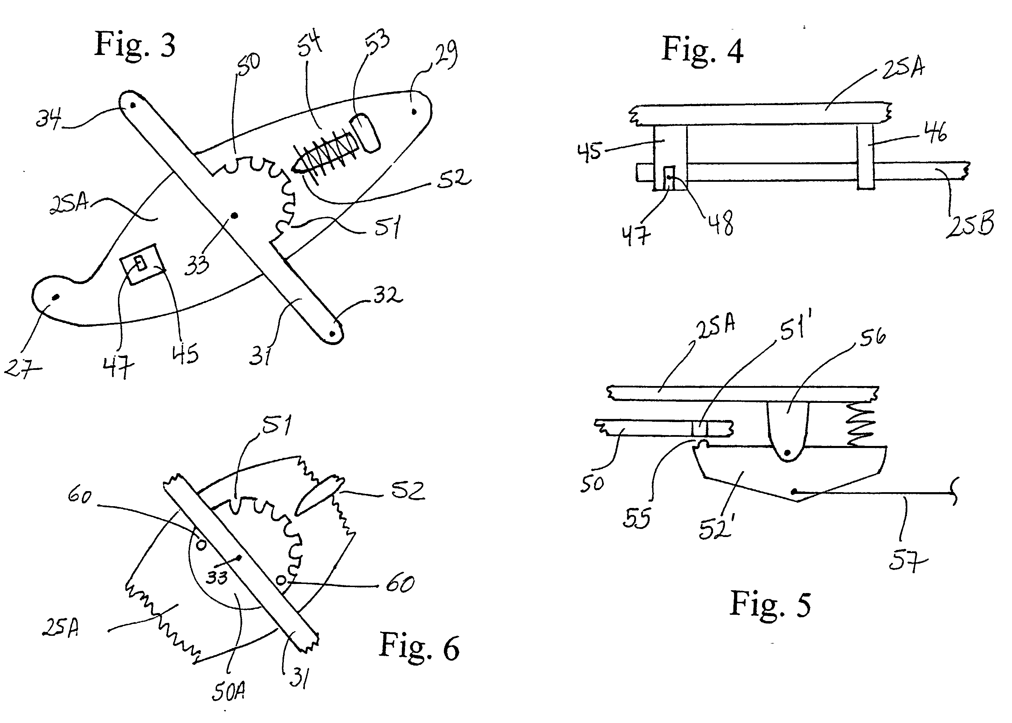

Figs. 3 and 4 show a locking mechanism using known principles for the above structure.

The back bar 25 of the seat 20 consists of two members 25A and 25B. Member 25A is a plastics moulding, carrying two projecting mountings 45 and 46 as shown in Fig. 4. (To reduce the complexity of Fig. 3, mounting 46 is not shown in that drawing.) Member 25B is a tubular shaft (omitted from Fig. 3 to reduce complexity) which is held in mountings 45 and 46. The shaft 25B has a pin 48 projecting from it through a slot 47 in the mounting 45. The shaft 25B therefore forms an extension of the member 25A, being held longitudinally thereon. The other end (not shown) of the shaft 25B may be bent over to form a handle. The shaft 25B may be rotated in its mountings 45 and 46 so that its handle points inward, ie across the body of the buggy, for normal use but can be rotated to lie flat with the rest of the bar assembly when the buggy is folded up.

As shown in Fig. 3, the bar 31 is hinged at 33 with the member 25A. The bar 31 carries a semicircular element 50 with a plurality of depressions 51 around its edge. A ratchet pin 52 is mounted on the member 25A, and spring-loaded by a spring 54 (pressing against a stop 53 on the member 25A). An operating wire (not shown) is coupled to the pin 52 and extends along the shaft 25B to its far end, where it terminates in any convenient means for pulling it to retract the pin 52, eg a simple cranked lever mounted under the handle on the end of the shaft 25B. The position of the operating wire adapts naturally to any turning of the shaft 25B without any significant effect on the pin 52.

To release the seat for adjustment, the lever 52 is retracted away from the semicircle 50 by means of the operating wire. This frees the bar 31 to rotate on the hinge 33. The seat is adjusted to a desired position, and the operating wire is then released. The pin 52 will then enter one of the depressions 51 on the semicircle 50. This locks the bar 31 and the member 25A together, so that the seat is held in the desired position. To change the adjustment or to fold the buggy, the pin 52 must of course be retracted.

Fig. 5 shows a preferred modification of the locking mechanism. The semicircle 50 on the bar 31 has a series of holes close 51' to its edge, and instead of the pin 52 there is a lever 52' mounted on a mounting 56 on the member 25A. The lever 52' has a peg 55 on one end which will engage with the holes 51' on the semicircle 50. This engagement is urged by a spring 54'; the engagement is released by pulling on the operating wire 57.

Fig. 6 shows a preferred form of the present locking mechanism. In this, the semicircle 50 has been replaced by a full circle or disc 50A which is separate from the bar 31 and mounted for independent rotation on the hinge 33. This disc 50A is spring-urged by a spring (not shown) for clockwise rotation. The disc carries two pegs 60 which engage with the bar 31.

The setting of the scat position can be changed as follows. Assume that the seat is to be moved to a more upright position. This can be done regardless of the setting of the disc 50A, since it involves rotating the bar 31 clockwise, away from the pegs 60 on the disc. Once the desired position has been reached, the pin 52 is withdrawn from the disc 50A. The disc will then rotate clockwise, under its spring loading, until the pegs 60 contact the bar 31. The pin 52 is then released to engage with a depression 51 in the disc 50A. If the seat is to be moved to a more reclined position, the pin 52 must be withdrawn before adjustment can begin; it may be convenient then to move the seat to the fully reclined position, release the pin 52, and adjust the seat back up toward the desired position.

It will of course be realized that this locking mechanism can be applied to one or both sides of the buggy, and can be applied to any convenient junction of two bars in the bar assembly or between the bar assembly and the A frame.

Assume that the seat has been set to a desired position, so that the disc 50A has been locked in position on the member 25A. The bar 23 is able to rotate clockwise, but its rotation anti-clockwise will be limited by its coming into contact with the pegs 60. As described above, to fold the buggy, the bar 31 rotates clockwise relative to bar 25. The buggy can therefore be folded up regardless of the setting of the disc 60. When the buggy is unfolded, however, the seat will be held at the previously set position during the unfolding.

For this, the seat must naturally tend toward the fully reclined position. This can be ensured by providing suitable spring loading on the bar assembly. For example, a spring (not shown) can be provided at the hinge 32, tending to force the bar 31 anticlockwise. This will ensure that the rearward end of the bar 26 is held bearing down against the bar 12 during unfolding, taking the seat along the "fully reclining" trajectory. When the seat reaches its preset position, it leaves the "fully reclining" trajectory and follows the trajectory for the set degree of reclining until the buggy is fully unfolded.

Fig. 7 shows the compete buggy in the cot mode, with the seat back being arranged to form the bottom of the cot. This is achieved by the releasing the seat back from the back bar 25 and allowing it to fall downwardly in Fig. 7 from the back bar 25. In the cot position the back bar is not quite horizontal but is slightly inclined and the seat back falls below the back bar 25 in a pivoting action about the hinge 27 with the seat so that the seat back is horizontal and is then the cot base. The upholstery on the side of the seat back is tailored to extend to form the side of the cot between the back bar and the seat back/cot base. An additional detachable hood 80 is added to the front end, that is the seat end, of the cot, to form the complete pram in this mode.

Fig. 8 shows the complete buggy in the seating mode with the seat back not inclined. The seat back may be inclined to a variety of inclinations and the buggy may be folded in any reclined position or in the cot position. When the buggy is subsequently unfolded the seat back remains in the previous inclined position, or the cot position, at the time of folding. This has significant advantages for the user. Existing buggies may only be folded in the upright position or always return to the upright position when the buggy is subsequently unfolded again. This is disadvantageous for the user because usually it is required to use the buggy for the same use either a reclined sleeping position or the cot position, say, for a continuous period during which the buggy will be required to be folded and unfolded a number of times. This may typically happen when the buggy is used to take a child somewhere in a car and the child is asleep in the inclined position, and it is desirable to transfer the sleeping child back to the buggy in the reclined or cot position. There is a considerable advantage in this feature of the invention in that the buggy can effectively be a pram for the first period of a baby's life of 6 to 9 months during which the buggy will also unfold as a pram after folding. This saves the user considerable time compared to existing buggies which would have to be inclined each time they arc unfolded. When the child is older than 9 months and able to sit up the buggy can be converted to a push chair and it will always return to a push chair mode after folding. Thus the buggy of the present invention really does perform as a dual purpose cot and push chair as well as separate pram and push chair in this way which has not been achieved previously.

All references in the claims, are references within the meaning of Rule 29(7) EPC.

## Claims

1. A foldable baby buggy with an adjustable seat, including seat position setting means settable to store the chosen seat position and to thereafter return the seat to that position when the buggy is unfolded, ***characterized in that*** the seat position setting means is mounted between first and second X-linked bars, the first bar (25) being coupled to the seat back and the second bar (31) being coupled to the frame of the buggy, and comprises a disc (50A) mounted for independent rotation on a hinge (33) between the two bars (25, 31), with means (51, 52) for locking the position of the disc relative to one bar (25) and means (60) for limiting the rotation of the other bar (31) relative to the disc.

2. A buggy according to claim 1 ***characterized in that*** the seat comprises a seat back settable to a range of positions between relatively upright and fully reclined and hinged to a seat base (26) arranged to slide forward substantially horizontally as the seat back moves to the reclined position.

3. A buggy according to claim 2 ***characterized in that*** a first point (29) on the seat back and partway thereup is coupled to the frame of the buggy by coupling means (28) so as to move vertically, a second point (33) on the seat back partway between the first point and the bottom edge thereof is coupled to the frame by a hinged bar (31) so as to move diagonally forward and downward, and the seat base is slidably mounted (at 24) on the frame to move horizontally.

4. A buggy according to claim 3 ***characterized in that*** the hinged bar (31) extends upward beyond the back of the seat to form an X linkage therewith, an upper horizontal bar (35) is hinged to the top end (34) of that bar, and a vertical link bar (36) is hinged between the forward ends of the upper horizontal bar (35) and the base of the seat (26).

5. A buggy according to claim 4 ***characterized in that*** the coupling means (28) comprises a bar extending rearward from the back of the seat and a further horizontal bar (39) is provided, hinged at one end (38) to the forward end of the upper horizontal bar and sliding at its back end (40) on the further horizontal bar.

## Patentansprüche

1. Zusammenklappbarer Kleinkind-Sportwagen mit so einstellbarem Mittel zur Sitzeinstellung, dass die gewählte Sitzposition gespeichert bleibt und der Sitz beim Ausklappen des Sportwagens in die gespeicherte Stellung gestellt wird, ***dadurch gekennzeichnet, dass*** das Mittel zur Sitzeinstellung zwischen ersten und zweiten über Kreuz verbundenen Stäben montiert ist, wobei der erste Stab (25) an die Rücklehne und der zweite Stab (31) an den Rahmen des Sportwagens gekoppelt ist, und er eine zur unabhängigen Drehung auf einem Drehgelenk (33) zwischen den beiden Stäben (25, 31) montierte Scheibe (50a) mit Mitteln (51, 52) zur Verriegelung der Stellung der Scheibe relativ zu dem einen Stab (25) und Mittel (60) zur Begrenzung der Drehbewegung des anderen Stabs (31) relativ zu der Scheibe aufweist.

2. Sportwagen gemäß Anspruch 1, ***dadurch gekennzeichnet, dass*** der Sitz eine Rücklehne aufweist, die sich in eine Reihe verschiedener Stellungen zwischen relativ aufrechter und ganz liegender Stellung einstellen lässt und so an eine Sitzbasis (26) angelenkt ist, dass sie mit der Bewegung der Rücklehne in die liegende Stellung im wesentlichen waagerecht nach vorne gleiten kann.

3. Sportwagen gemäß Anspruch 2, ***dadurch gekennzeichnet, dass*** ein erster Punkt (29) auf der Rücklehne und in einer gewissen Höhe auf dieser mit Kopplungsmitteln (28) an den Rahmen des Sportwagens gekoppelt ist, so dass er sich lotrecht bewegen kann, ein zweiter Punkt (33) auf der Rücklehne in einer Position zwischen dem ersten Punkt und der Lehnenunterkante mit einer scharnierten Stange (31) so an den Rahmen gekoppelt ist, dass er sich diagonal vorwärts und nach unten bewegt, und die Sitzbasis (bei 24) gleitend auf dem Rahmen montiert ist, so dass sie sich waagerecht bewegen kann.

4. Sportwagen gemäß Anspruch 3, ***dadurch gekennzeichnet, dass*** sich die scharnierte Stange (31) über den hinteren Teil des Sitzes hinaus erstreckt und mit diesem eine Überkreuzverbindung bildet, ein oberer waagerechter Stab (35) an das obere Ende (34) dieses Stabs angelenkt ist, und dass ein lotrechter Verbindungsstab (36) scharniert zwischen den Vorderenden des oberen waagerechten Stabs (35) und der Sitzbasis (26) angelenkt ist.

5. Sportwagen gemäß Anspruch 4, ***dadurch gekennzeichnet, dass*** das Kopplungsmittel (28) einen vom hinteren Teil des Sitzes ausgehenden, nach hinten verlaufender Stab aufweist und ein weiterer, waagerechter Stab (39) vorgesehen ist, der an einem Ende (38) an das Vorderende des oberen waagerechten Stabs angelenkt ist und mit seinem hinteren Ende (40) auf dem weiteren waagerechten Stab gleitet.

## Revendications

1. Poussette d'enfants pliable dotée d'un siège ajustable, comprenant un moyen de réglage de la position du siège réglable pour retenir la position choisie du siège et pour, par la suite, remettre le siège sur cette position chaque fois que la poussette est dépliée, ***caractérisée en ce que*** le moyen de réglage de la position du siège est monté entre la première et la deuxième barres reliées en X, la première barre (25) étant accouplée au dossier du siège et la deuxième barre (31) étant accouplée au cadre de la poussette, et comporte un disque (50A) monté pour une rotation indépendante sur un pivot d'articulation (33) entre les deux barre (25, 31), avec des moyens (51, 52) destinés à bloquer la position du disque par rapport à une barre (25) et un moyen (60) destiné à limiter la rotation de l'autre barre (31) par rapport au disque.

2. Poussette selon la revendication 1, ***caractérisée en ce que*** le siège comporte un dossier de siège réglable selon un éventail de positions allant de la position relativement verticale à la position entièrement inclinée et articulé sur une base de siège (26) disposée pour glisser vers l'avant dans une large mesure de manière horizontale lorsque le dossier du siège se déplace jusqu'à la position inclinée.

3. Poussette selon la revendication 2, ***caractérisée en ce qu***'un premier point (29) situé sur le dossier du siège et à mi-hauteur de ce dernier est accouplé au cadre de la poussette par un moyen d'accouplement (28) de telle manière à obtenir un déplacement de manière verticale, un deuxième point (33) situé sur le dossier du siège à mi-chemin entre le premier point et le bord inférieur de ce dernier est accouplé au cadre par une barre articulée (31) de telle manière à obtenir un déplacement de manière diagonale vers l'avant et vers le bas, et la base du siège est montée de manière coulissante (au niveau de 24) sur le cadre pour obtenir un déplacement de manière horizontale.

4. Poussette selon la revendication 3, ***caractérisée en ce que*** la barre articulée (31) se prolonge vers le haut au-delà du dossier du siège pour former une tringlerie en X avec celui-ci, une barre horizontale supérieure (35) est articulée sur l'extrémité supérieure (34) de cette barre, et une barre d'accouplement verticale (36) est articulée entre les extrémités avant de la barre horizontale supérieure (35) et la base du siège (26).

5. Poussette selon la revendication 4, ***caractérisée en ce que*** le moyen d'accouplement (28) comporte une barre se prolongeant vers l'arrière en provenance du dossier du siège et une autre barre horizontale (39) est prévue, articulée à une extrémité (38) sur l'extrémité avant de la barre horizontale supérieure et coulissant au niveau de son extrémité arrière (40) sur l'autre barre horizontale.
